# EUROPEAN PATENT SPECIFICATION

(11) **EP 3 143 867 B1**
(45) Date of publication and mention of the grant of the patent: **04.07.2018**
(21) Application number: 16188228.7
(22) Date of filing: 12.09.2016
(51) Int. Cl.: A01F 15/00, A01F 15/07

(54) **BALE WRAPPER**
BALLENWICKLER
ENRUBANNEUSE

(30) Priority: 15.09.2015 FI 20155662
(43) Date of publication of application: 22.03.2017
(73) Proprietor: Agronic Oy, 86600 Haapavesi (FI)
(72) Inventor: KURONEN, Urpo, 86600 Haapavesi (FI)
(74) Representative: Berggren Oy, Helsinki & Oulu

(56) References cited:
- DE-U1- 20 015 653
- FR-A1- 2 651 959

## Description

The invention relates to a bale wrapper with a frame, a receiving station for receiving a bale, a wrapping device for wrapping a protective film around the received bale, the wrapping device comprising a wrapping station, a wrapping table and an actuator for moving the wrapping table between the receiving station and wrapping station.

Feed plants and hay are often stored as round bales. Combined machines hauled behind a tractor are used in baling, which lift a feed mattress on the field into a baling chamber in the device by using a picking roll and form a cylindrical bale as the baler moves. From the baling chamber the round bale is transferred to a wrapping device, in which an air and water tight protective film of plastic is tightly wrapped around the bale.

In known combined machines the wrapping device is arranged to the rear of the device and the baling chamber to the front. The round bale is transferred on a conveyor from the baling chamber onto a separate wrapping table belonging to the wrapping device. The wrapping table typically comprises two parallel support rolls, on which the bale in a horizontal position is rotated around its longitudinal axis. Simultaneously with the rotation of the bale, a stretchable protective film is wrapped around the bale by using the wrapping device. After wrapping of the protective film, the wrapping table is tilted so that the bale wrapped in the protective film rolls from the wrapping table to the field, where it is left to wait for transport to storage or a site of use.

In documents EP 0865723 B1 and EP 1438889 B1 combined machines with a movable wrapping table are disclosed, which wrapping table can move on guide tracks between the receiving station of the baling chamber and the wrapping station of the wrapping device. A typical problem with moving wrapping tables is their slow motion speed, which causes delays for the operation of the device. In document EP 0865723 B1 the wrapping table is moved by a chain-driven mechanism, and in document EP 1438889 B1 it is moved by several hydraulic cylinders. Guide tracks and chain-driven mechanisms are susceptible to malfunctions, especially in wet and muddy operating environments. The above-mentioned transfer mechanisms are also structurally complex and their manufacturing costs are high. Document DE 20015653 U1 discloses a bale wrapper according to the preamble of claim 1.

An object of the invention is to provide a bale wrapper, with which drawbacks and defects relating to the prior art can be reduced.

The objects of the invention are achieved with a bale wrapper, which is characterized in what is disclosed in the independent patent claim. Some advantageous embodiments of the invention are disclosed in the dependent patent claims. The object of the invention is a bale wrapper, which has a frame, a receiving station for receiving a bale, and a wrapping device for wrapping a protective film around the received bale. The wrapping device has a wrapping station, a wrapping table and an actuator for moving the wrapping table between the receiving station and wrapping station. The wrapping table is suspended to the frame in an articulated manner with at least one first rocker and at least one second rocker. The rockers can be brought to a first position so that the wrapping table is in the receiving station, and to a second position so that the wrapping table is in the wrapping station. Thus the wrapping table is suspended to the frame of the baler like a swing, and it can be moved between the receiving station and wrapping station along a curved path defined by the length of the rockers. The receiving station refers here to the point of the bale wrapper, to which the bale is placed when it arrives at the bale wrapper to be wrapped in the protective film. The wrapping station again refers here to the point of the baler, to which the bale received in the receiving station is transferred for the duration of the wrapping of the protective film.

The bale wrapper of the invention can be a separate device operating independently, to which bales formed by a baler can be fed, for example, along a conveyor. The bale wrapper can also be a separate device, which is coupled to a baler as a fixed or detachable part so that the bales formed in the baler are automatically transferred to the bale wrapper. Further, the bale wrapper of the invention can be built as part of a so-called combined machine, which comprises a baler for forming a bale of the baler and a bale wrapper of the invention. In this kind of a combined machine the bale is transferred directly to a wrapping table in the receiving station of the bale wrapper when leaving the baling chamber. A combined machine has one frame, which functions as the frame of both the baler and bale wrapper.

In the bale wrapper of the invention the rockers can be brought to a third position so that the wrapping table is in an intermediate station between the receiving station and wrapping station. In a usual position of use of the bale wrapper, the bale wrapper moves on the field on its wheels, hauled by a working machine. When the bale wrapper is in the position of use, the wrapping table is in the intermediate station lower in elevation than in the receiving station and wrapping station. Change in elevation is a consequence of that the wrapping table moves from the receiving station to the wrapping station along a downwards curved path.

In an advantageous embodiment of the bale wrapper of the invention the wrapping table is arranged to move from the receiving station to the intermediate station by the impact of gravity of the wrapping table and the bale arranged on it, when the bale wrapper is in the usual position of use. In practice, this can be carried out for example so that the wrapping table is transferred to the receiving stations by using an actuator and locked in place in the receiving station with locking elements, which can keep an empty wrapping table in place, but which open automatically when the weight of the wrapping table increases sufficiently due to the bale placed on it. The wrapping table can be locked in place for the duration of the reception of the bale also without separate locking elements by means of the holding function of the actuator moving the wrapping table.

In combined machines the bale is removed from the baling chamber by opening the back wall of the baling chamber so that the bale can roll from the baling chamber to the receiving station. The back wall cannot be closed before the bale has moved far enough from the receiving station towards the wrapping station. A special advantage of this embodiment of the invention is that the wrapping table transfers from the receiving station to the intermediate station by means of gravity immediately when the bale formed in the baling chamber moves from the baling chamber to the wrapping table. Thus, transferring the bale does not require separate identification of the place of the bale and/or activation of the transfer mechanism, which could cause delays for the operation of the combined machine. The intermediate station is located at such a distance from the baling chamber that the bale on the wrapping table does not prevent the closing of the back wall of the baling chamber.

In a third embodiment of the bale wrapper of the invention the wrapping table has a front edge and back edge, and the wrapping table in the wrapping station can be brought to a discharge position, in which the front edge of the wrapping table is located substantially higher than the back edge in the direction of height. The front edge of the wrapping table refers here to the edge of the wrapping table, which is closest to the front end of the bale wrapper, and transverse to the longitudinal direction of the baler, and the back edge refers to the edge of the wrapping table, which is closest to the back end of the bale wrapper and parallel to the front edge. In the discharge position the wrapping table has thus been tilted strongly around a rotational axis parallel to the direction of the back edge so that the bale on the wrapping table falls from the wrapping table to behind the baler. At this stage a protective film has been wrapped in place around the bale. The heights of the front edge and back edge refer to heights measured from the baler, when it is in a usual position of use.

In yet another advantageous embodiment of the bale wrapper of the invention the wrapping table has a centre-of-mass line and the wrapping table is suspended to the frame with two first rockers from the part between the centre-of-mass line and the front edge and with two second rockers from the part between the centre-of-mass line and the back edge. The wrapping table is thus suspended to the frame of the bale wrapper with four rockers. The first rockers are preferably flexurally rigid rods.

In yet another advantageous embodiment of the bale wrapper of the invention the said actuator is arranged to rotate the first rocker around the fastening point of the rocker and frame. Because the first rockers are rigid and also the wrapping table is a rigid piece, all rockers rotate simultaneously when the rotating force is directed to at least one first rocker. Thus only one actuator is needed to move the wrapping table.

In yet another advantageous embodiment of the bale wrapper of the invention the length of the second rockers can be changed. Preferably, the second rockers are cylinders with adjustable length, such as hydraulic cylinders. Adjusting the length of the second rockers affects the height of the back edge of the wrapping table in the wrapping station. The height of the front edge of the wrapping table can again be changed by changing the rotational angle of the first rockers. This advantageous embodiment of the invention thus makes possible the changing of the elevational position of the wrapping table in the wrapping station during the use of the bale wrapper. This property is especially useful when bales of different sizes are wrapped to a protective film in the bale wrapper.

In yet another advantageous embodiment of the bale wrapper of the invention said actuator is a transfer cylinder of adjustable length, which has a first end attached to the frame and a second end attached to the first rocker either directly or via a lever mechanism. Preferably the transfer cylinder is a hydraulic cylinder.

In yet another advantageous embodiment of the bale wrapper of the invention the lever mechanism comprises a control lever, which has a first end attaching to the frame in an articulated manner and a second end attaching to the second end of the transfer cylinder in an articulated manner. The control lever forces the second end of the transfer cylinder to move along a path in form of a circular arc. Preferably, the lever mechanism further comprises a crab bar, which has a first end attaching to the first rocker and a second end attaching in an articulated manner to the second end of the transfer cylinder. By means of the crab bar and the control lever, the longitudinal movement of the second end of the transfer cylinder can be converted into a movement strongly tilting the first rocker, which makes the wrapping table to rotate to the discharge position.

In yet another advantageous embodiment of the bale wrapper of the invention the wrapping table can be moved to the receiving station by bringing the transfer cylinder to a first length. From the receiving station the wrapping table can be moved to the intermediate station by bringing the transfer cylinder to a second length and to the wrapping station by bringing the transfer cylinder to a third length. The wrapping table still in the wrapping station can be brought to the discharge position by bringing the transfer cylinder to a fourth length. The transfer cylinder can be arranged to the bale wrapper so that the fourth length of the transfer cylinder is bigger than the third length, the third length is bigger than the second length, and the second length is bigger than the first length. In this case, the movement of the wrapping table from the receiving station to the discharge position can be arranged by increasing the length of the transfer cylinder, and from the discharge position to the receiving station by shortening the length of the transfer cylinder.

It is an advantage of the bale wrapper of the invention that it is structurally simple and reliable. The simple structure means savings in the manufacturing and maintenance costs of the bale wrapper.

It is further an advantage of the invention that in it the bale moves fast from the receiving station to the intermediate station, which makes possible the fast closing of the back wall of the baling chamber of a combined machine. The forming of a new bale can thus be commenced without delays, which raises the work achievement of the combined machine.

It is a special advantage of an embodiment of the bale wrapper of the invention that it makes possible to adjust the elevation of the wrapping table in the wrapping station to be suitable for bales of different sizes.

The invention will next be explained in detail, referring to the attached drawings, in which
Figure 1a is an exemplary side view of a combined machine equipped with a bale wrapper of the invention;
Figure 1b is a top view of the combined machine of Fig. 1a;
Figures 2a - 2d are exemplary side views of a bale wrapper of the invention; and
Figures 3a and 3b are exemplary side views of an advantageous embodiment of a bale wrapper of the invention.

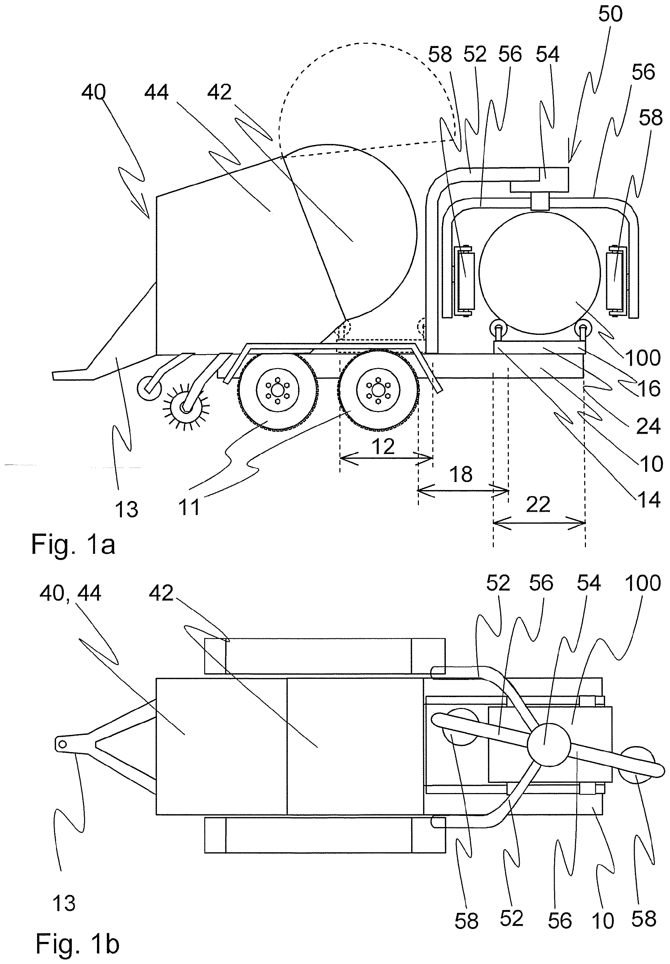

Figures 1a and 1b illustrate an example of a combined machine, which is provided with a bale wrapper of the invention. In Figure 1a, the combined machine is shown from the side and in Figure 1b from the top. The combined machine has an elongated frame 10 consisting of beam-type parts, two shafts with wheels 11 at their ends being attached to the frame. At the first end of the frame there is a tow bar 13, which has a towing eyelet for fastening to a work machine or tractor vehicle. At the first end of the frame there is further a baling chamber 40, the edge facing the tow bar of which is provided with means for collecting the material to be baled from the field and for leading it into the baling chamber. Inside the baling chamber there are baling tools, with which the baler forms a round bale from the material fed to the baling chamber, such as feed plants or hay. The baling chamber comprises a front section 44 attached fixedly to the frame 10 and an openable back wall 42, the upper edge of which is fastened hingedly to the upper edge of the front section. The back wall can be turned to an opening position illustrated with a broken line in the figure so that the bale formed in the baling chamber can roll outside the baling chamber to the bale receiving station 12. The baling tools belonging to the baling chamber are as such known technique, so they are not explained more closely in this connection.

The bale wrapper of the invention can be built on top of the frame of a combined machine behind the baling chamber or, alternatively, the baling chamber can be fitted on top of the frame of the bale wrapper. Thus, the combined machine does not have two separate frames, but the baling chamber and bale wrapper are supported on the same frame. The frame of the bale wrapper refers here to the part of the frame of the combined machine, which extends to the area of the bale wrapper. The bale wrapper includes a wrapping device 50 at the second end of the frame, comprising two shaped supporting arms 52. The supporting arms attach from their first ends to the frame, and their second ends are connected to an interconnector 54 above the second end of the frame. Two wrapping arms 52 are rotatably attached to the interconnector, the free ends of which point substantially vertically downwards. The wrapping arms have brackets, to which protective film rolls 58 are attached. In the middle of the circular path of the wrapping arms there is a wrapping station 22, to which a wrapping table 24 is positioned when a bale 100 resting on the wrapping table is being wrapped in the protective film.

The wrapping table 24 belonging to the bale wrapper is as such a known device, comprising two parallel supporting rolls, an endless belt circulating around the supporting rolls and a motor rotating the second supporting roll. By driving the motor, the bale on the wrapping table is made to rotate about its horizontal axis at the same time as the protective film rolls circulate the bale around a vertical rotating axis. Thus protective film is evenly wrapped to the outer surface of the bale. The wrapping table 24 is suspended to the frame 10 with rockers so that the wrapping table can be moved to the receiving station 12 in the vicinity of the baling chamber and to the wrapping station 22, which is located at a distance from the receiving station (the rockers are not illustrated in the figures). The receiving station refers to the point of the frame of the bale wrapper, to which the bale 100 formed in the baling chamber is transferred from the baling chamber. In the bale wrapper of the invention the wrapping table is transferred to the receiving station so that the bale formed in the baling chamber moves from the baling chamber directly to the wrapping table. After having received the bale, the wrapping table moves to an intermediate station 18 between the receiving station 12 and wrapping station 22, at a distance from the receiving station. In the intermediate station the bale resting on the wrapping table does not meet the path of the closing back wall 42 of the baling chamber 40 so that the back wall can be closed and the forming of a new bale can begin. From the intermediate station wrapping table 24 moves to the wrapping station 22 in the middle of the wrapping device 50, where the protective film is wrapped around the bale 100 on the wrapping table 24. After the wrapping of the protective film, the wrapping table is tilted so that the bale falls over the back edge 16 of the wrapping table and away from the wrapping table. After this the wrapping table is ready to be transferred again to the receiving station for the reception of a next bale.

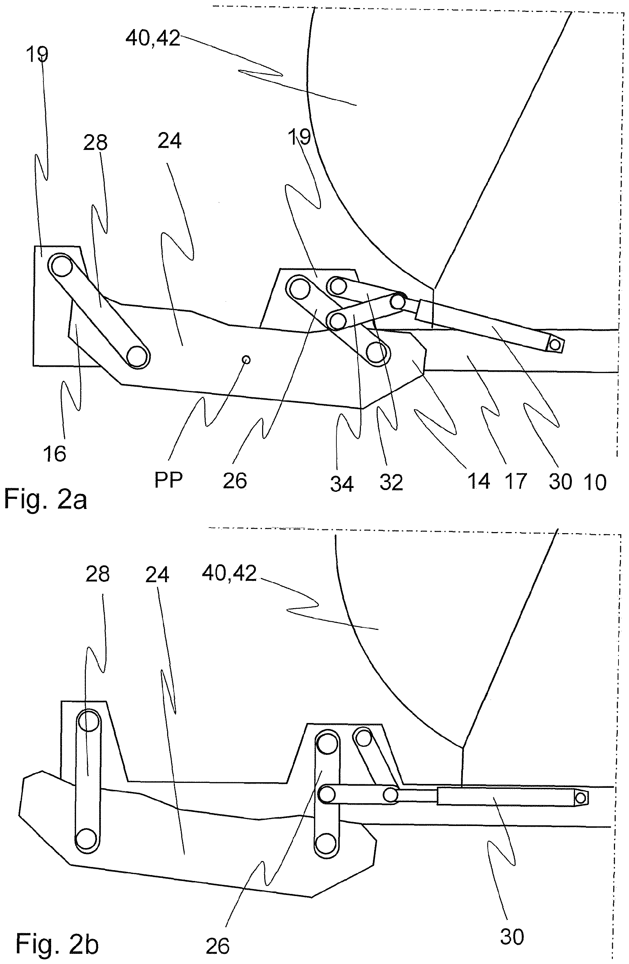

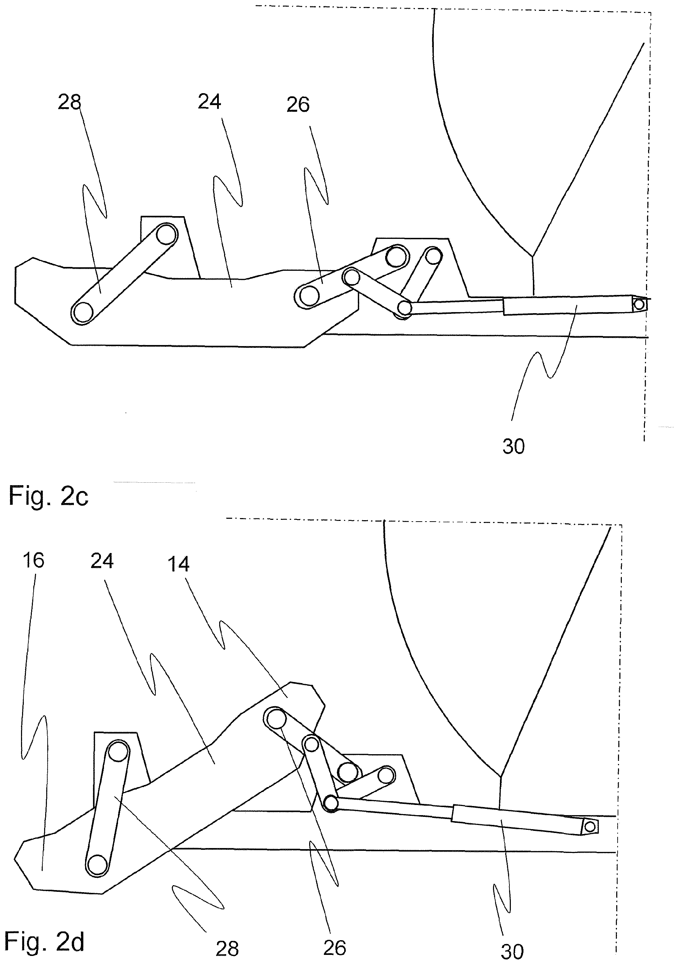

In Figures 2a, 2b, 2c and 2d, the bale wrapper of the invention is illustrated in an exemplary manner seen from the side. The figures illustrate the same bale wrapper in different positions of the wrapping table 24. For maintaining the clarity of the figures, the wrapping device is not shown at all, but only a part of the baling chamber 40 and the frame 10 of the bale wrapper as well as the tools needed for the supporting and moving of the wrapping table. The wrapping table is illustrated with a simplified structure. The figures illustrate the bale wrapper in the position of use, i.e. in the position in which the bale wrapper is in the usual baling situation.

In Figure 2a the wrapping table 24 is in the receiving station close to the openable back wall 42 of the baling chamber 40. The bale wrapper frame comprises two parallel frame beams 17 in the longitudinal direction of the bale wrapper, between which the wrapping table 24 is suspended by rockers 26, 28. For better illustration of the tools supporting the wrapping table, the frame beam closer in the figure has been left out. The wrapping table has a front edge 14 and a back edge 16. The front edge refers to the edge of the wrapping table closest to the baling chamber 40, and the back edge refers to the edge of the wrapping table farthest away from the baling chamber. The centre of mass line PP of the wrapping table travels approximately halfway between the front edge and the back edge. The wrapping table is suspended to the frame beams 17 by two first rockers 26 and two second rockers 28. The rockers are flexurally rigid rod-type metal parts. The first rockers attach from their first ends to the sides of the wrapping table to the section between the centre of mass line PP and the front edge 14 of the wrapping table. Respectively, the second rockers attach from their first ends to the sides of the wrapping table between the centre of mass line PP and the back edge 16 of the wrapping table. From their second ends, the rockers attach to the fastening lugs 19 in the frame beams. The mountings of both ends of the rockers are bearing-mounted pivot mountings so that the rockers can rotate around their fastening points. The wrapping table suspended on rockers can thus move on the rockers along a downwards curved path. In Figure 2a the rockers are in the first position, in which their first ends are closer to the baling chamber than the second ends. When no force is applied laterally to the wrapping table, the wrapping table is set to the lowest point of its curved path in the intermediate station shown in figure 2b by the impact of gravity.

The bale wrapper includes an actuator in the form of a hydraulically driven transfer cylinder 30 adjustable in length for changing the place and position of the wrapping table. The transfer cylinder is fastened at its first end to the frame beam 17 close to the baling chamber 40. At the second end of the transfer cylinder there are attached two flexurally rigid rod-type levers, the control lever 32 and crab bar 34. The control lever is attached at its first end pivotably to the fastening lug in the frame beam 17 and at its second end pivotably to the second end of the transfer cylinder. Respectively, the crab bar 34 is attached at its first end pivotably to the first rocker 26, approximately halfway of the length of the first rocker, and at its second end pivotably to the second end of the transfer cylinder.

The transfer cylinder 30, control lever 32 and crab bar 34 form a mechanism, by means of which the wrapping table 24 can be moved in the longitudinal direction of the frame beams 17 of the bale wrapper. Changing the length of the transfer cylinder makes the second end of the transfer cylinder move along a path in the form of a circular arc, forced by the control lever. Shortening the transfer cylinder makes the crab bar move towards the baling chamber so that the first ends of the rockers move towards the baling chamber, pulled by the crab bar. Respectively, extending the transfer cylinder makes the crab bar move away from the baling chamber so that the first ends of the rockers move away from the baling chamber, pulled by the bar.

In Figure 2a the transfer cylinder 30 is in a first length so that the wrapping table has moved on the rockers to the receiving station close to the back wall 42 of the baling chamber. In the receiving station the wrapping table is located higher than in the lowermost point of the curved path of the wrapping table. The wrapping table moved to the receiving station is held in place by means of the hydraulic fluid pressure, so-called brake pressure affecting in the transfer cylinder of the receiving station.

The round bale formed in the baling chamber rolls from the baling chamber directly to the wrapping table, when the back wall 42 of the baling chamber 40 is opened (the bale is not shown in the figures). The brake pressure in the transfer cylinder is dimensioned so that it is able to hold in place the weight of an empty wrapping table in the receiving station, but not the total weight of the wrapping table and bale. Because of this the wrapping table moves to the intermediate station according to figure 2 at a distance from the baling chamber by means of gravity immediately after the receipt of the bale. The wrapping table moving by gravity pulls the transfer cylinder to a second length, which is bigger than the first length. At the same time, the rockers rotate to the third, substantially vertical position.

Moving the wrapping table from the receiving station to the intermediate station does thus not require a separate identification of the bale position and/or start of the actuator moving the wrapping table. The distance of the intermediate station from the back wall 42 of the baling chamber is so big that the bale in the intermediate station is not on the path of the closing back wall. Thus, the back wall can in practice be closed immediately after the finished bale has been removed, and the forming of a new bale can be commenced in the baling chamber.

In Figure 2c the wrapping table 24 is in the wrapping station 22. Moving the wrapping table from the intermediate station to the wrapping station is done by leading pressurized hydraulic fluid to the transfer cylinder so that the length of the transfer cylinder grows to a third length, which is bigger than the second length. The rockers 26 28 then rotate to the second position according to figure 2c and the wrapping table moves along a curved path away from the baling chamber, rising simultaneously upwards. The wrapping table is held in place in the wrapping chamber by means of the hydraulic fluid pressure acting in the transfer cylinder. In this position of the wrapping table a protective film is wrapped around the bale by using the wrapping device.

When the protective film has been wrapped in place, the bale is removed from the wrapping table 24. The bale is removed by tilting the wrapping table 24 to a discharge position according to figure 2d, in which the front edge 14 of the wrapping table is located substantially higher than the back edge 16 of the wrapping table. The bale wrapped in the protective film rolls then over the back edge of the wrapping table off from the wrapping table. The wrapping table is brought to the discharge position by leading pressurized hydraulic fluid to the transfer cylinder 30 so that the length of the transfer cylinder grows to a fourth length, which is bigger than the third length. The first rockers 26 are then rotated so that their first ends rise higher than the second ends. At this stage the second rockers 28 behave in a reverse manner, i.e. they rotate to the opposite direction and their first ends fall slightly downwards. Because of the different rotation of the rockers the front edge 14 of the wrapping table rises upwards and the back edge 16 descends downwards. When the bale has left the wrapping table, the transfer cylinder 30 is brought back to the first position so that the wrapping table moves to the receiving station through the intermediate station.

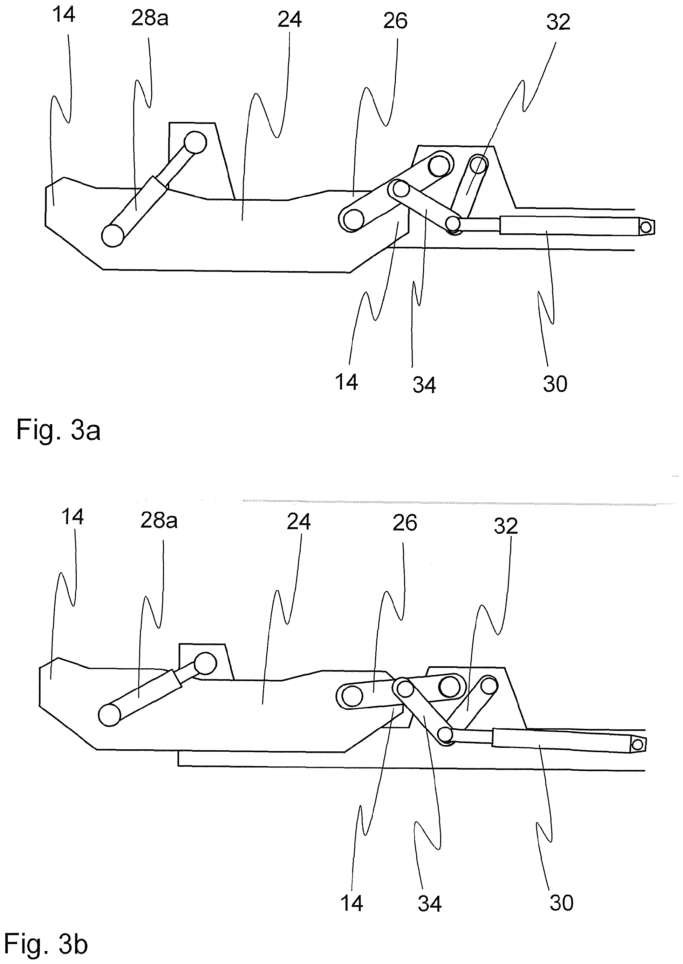

Figures 3a and 3b illustrate in an exemplary manner an advantageous embodiment of a bale wrapper of the invention, seen from the side. This embodiment of the invention contains the same structural parts as the invention disclosed in the figures 1a, 1b and 2a-2d, and the same names and reference numbers are used of them. The embodiment illustrated in the figures deviates from the invention explained previously so that the second rockers 28a supporting the back wall 16 of the wrapping table 24 are cylinders of adjustable length, preferably hydraulic cylinders. The first rockers 26 supporting the front edge 14 of the wrapping table are flexurally rigid rods similar to those described above. The transfer cylinder 30 moving the wrapping table, the control lever 32 and crab bar 34 are identical to those explained above.

In this embodiment of the bale wrapper the length of the second rockers can be adjusted, which affects the elevation of the back edge 16 of the wrapping table. The elevation of the front edge 14 of the wrapping table can be brought to the same level with the elevation of the back edge by rotating the first rockers 28 to a suitable position by means of the transfer cylinder 30. In Figure 3a the second rocker is in the extended position and in figure 3b in the short position. As can be seen from the figures, by shortening the second rockers the wrapping table 24 can be lifted up from the level defined by the frame beams 17. Thus the bale on the wrapping table can be positioned exactly to a desired height in relation to the height level of the protective film rolls of the wrapping device. This feature is of advantage especially in combined machines with adjustable chambers, in which round bales of different sizes can be prepared.

In the embodiment disclosed above the second rockers were either flexurally rigid rods or cylinders of extendable length. When the first rockers are flexurally rigid rods, the second rockers need not necessarily be rigid. In this case the second rockers can be, for example, tensile resistant chains or wires. In the embodiment illustrated in figures 3a and 3b the first rockers were flexurally rigid rods and the second rods were cylinders of adjustable length. It is also possible for the first rockers to be parts of adjustable length, such as cylinders. In this case the second rockers can be either parts of standard or adjustable length.

The force of the transfer cylinder moving the wrapping table can be targeted directly at to the wrapping table instead of the rockers. In this case the first rockers need not necessarily be flexurally rigid objects, but they can be tensile resistant wires or chains. In this embodiment the second rockers have to be flexurally rigid rods.

It is also possible to suspend the wrapping table to the frame using only rigid first rockers, the position is which is altered by means of the transfer cylinder. In this case the bale wrapper has to be provided with a separate actuator for tilting the wrapping table in the receiving station and wrapping station to a desired angle in relation to the horizontal level. The actuator can be, for example, a hydraulic cylinder.

The wrapping device described in an exemplary manner in the embodiments above comprises wrapping arms in vertical position, which rotate around the bale rotating about a horizontal axis. It is obvious for those skilled in the art that also wrapping devices of different structure and operational principle can be used in the bale wrapper of the invention. For example, the wrapping device can include a state-of-the-art wrapping table, which makes the bale resting on it rotate both about a vertical and horizontal axis. The protective film rolls can then be in place attached to the frame of the device.

Some advantageous embodiments of the bale wrapper of the invention have been disclosed above. The invention is not restricted to the solutions explained above, but the inventional idea can be applied in different ways within limits set by the patent claims.

## Claims

1. Bale wrapper, which has a frame (10), a receiving station (12) for receiving a bale (100), a wrapping device (50) for wrapping a protective film around the received bale (100), the wrapping device comprising a wrapping station (22), wrapping table (24) and an actuator for moving the wrapping table (24) between the receiving station (12) and wrapping station (22), which wrapping table (24) is suspended to the frame (10) in an articulated manner by at least one first rocker (26) and at least one second rocker (28) so that the rockers (26, 28) can be brought to a first position, in which the wrapping table (24) is in the receiving station (12), and to a second position, in which the wrapping table (24) is in the wrapping station (22), **characterized in that** the rockers (26, 28) can be brought to a third position so that the wrapping table (24) is in an intermediate station (18) between the receiving station (12) and wrapping station (22) in which intermediate station (18) the wrapping table (24) is located lower in elevation than in the receiving station (12) and the wrapping station (22), when the bale wrapper is in its usual position of use.

2. Bale wrapper according to claim 1, **characterized in that** the wrapping table (24) is arranged to move from the receiving station (12) to the intermediate station (18) by an impact of gravity of the wrapping table (24) and the bale (100) arranged on it when the bale wrapper is in its usual position of use.

3. Bale wrapper according to claims 1 or 2, **characterized in that** wrapping table (24) has a front edge (14) and back edge (16) and that the wrapping table (24) in the wrapping station (22) can be brought to a discharge position, in which the front edge (14) of the wrapping table is located substantially higher in elevation than the back edge (16), when the bale wrapper is in its usual position of use.

4. Bale wrapper according to claim 3, **characterized in that** the wrapping table (24) has a mass of centre line (PP) and that the wrapping table (24) is suspended to the frame (10) by two first rockers (26) for the part between the mass of centre line (PP) and the front edge (14) and by two second rockers (28) for the part between the mass of centre line and the back edge (26).

5. Bale wrapper according to any of the claims 1-4, **characterized in that** the first rockers (26) are flexurally rigid rods.

6. Bale wrapper according to any of the claims 1-5, **characterized in that** the said actuator is fitted to rotate the first rocker (26) around the fastening point of the rocker (26) and the frame (10).

7. Bale wrapper according to any of the claims 1-6, **characterized in that** the length of the second rockers (28) is adjustable.

8. Bale wrapper according to claim 7, **characterized in that** the second rockers (28) are cylinders of adjustable length, preferably hydraulic cylinders.

9. Bale wrapper according to any of the claims 1-8, **characterized in that** said actuator is a transfer cylinder (30) of adjustable length, which has a first end attached to the frame (10) and a second end attached to the first rocker (26) either directly or through a lever mechanism.

10. Bale wrapper according to claim 9, **characterized in that** the said lever mechanism comprises a control lever (32), which has a first end attaching in an articulated manner to the frame (10) and a second end, which attaches in an articulated manner to the second end of the transfer cylinder (30).

11. Bale wrapper according to claim 9 or 10, **characterized in that** the said lever mechanism comprises a crab bar (34), the crab bar (34) having a first end attaching to the first rocker (26) and a second end attaching in an articulated manner to the second end of the transfer cylinder (30).

12. Bale wrapper according to any of the claims 9-11, **characterized in that** the said wrapping table (24) can be moved to the receiving station (12) by bringing the transfer cylinder (30) to a first length, to the intermediate station (18) by bringing the transfer cylinder (30) to a second length, to the wrapping station (22) by bringing the transfer cylinder (30) to a third length, and to a discharge position in the wrapping station (22) by bringing the transfer cylinder (30) to a fourth length.

13. Bale wrapper according to claim 12, **characterized in that** the fourth length of the transfer cylinder (30) is bigger than the third length, the third length is bigger than the second length, and the second length is bigger than the first length.

14. Bale wrapper according to any of the claims 9-13, **characterized in that** the said transfer cylinder (30) is a hydraulic cylinder.

## Patentansprüche

1. Ballenwickler, mit einem Rahmen (10), einer Aufnahmestation (12) zum Aufnehmen eines Ballens (100), einer Wickelvorrichtung (50) zum Wickeln eines Schutzfilms um den aufgenommenen Ballen (100), wobei die Wickelvorrichtung eine Wickelstation (22) aufweist, einen Wickeltisch (24) und ein Stellglied zum Bewegen des Wickeltischs (24) zwischen der Aufnahmestation (12) und Wickelstation (22), wobei der Wickeltisch (24) an den Rahmen (10) in einer gelenkigen Weise durch mindestens eine erste Schwinge (26) und mindestens eine zweite Schwinge (28) derart aufgehängt ist, dass die Schwingen (26, 28) zu einer ersten Position, in der der Wickeltisch (24) in der Aufnahmestation (12) ist, und zu einer zweiten Position, in der der Wickeltisch (24) in der Wickelstation (22) ist, gebracht werden können, **dadurch gekennzeichnet, dass** die Schwingen (26, 28) derart zu einer dritten Position gebracht werden können, dass der Wickeltisch (24) in einer Zwischenstation (18) zwischen der Aufnahmestation (12) und Wickelstation (22) ist, wobei sich der Wickeltisch (24) in der Zwischenstation (18) in einer geringeren Höhe befindet als in der Aufnahmestation (12) und der Wickelstation (22), wenn der Ballenwickler in seiner normalen Gebrauchsposition ist.

2. Ballenwickler nach Anspruch 1, **dadurch gekennzeichnet, dass** der Wickeltisch (24) angeordnet ist, um sich von der Aufnahmestation (12) zu der Zwischenstation (18) durch Schwerkraft des Wickeltischs (24) und des darauf angeordneten Ballens (100) zu bewegen, wenn der Ballenwickler in seiner normalen Gebrauchsposition ist.

3. Ballenwickler nach Anspruch 1 oder 2, **dadurch gekennzeichnet, dass** der Wickeltisch (24) eine vordere Kante (14) und eine hintere Kante (16) hat und dass der Wickeltisch (24) in der Wickelstation (22) zu einer Ausgabeposition gebracht werden kann, in der sich die vordere Kante (14) des Wickeltischs im Wesentlichen in einer höheren Höhe befindet als die hintere Kante (16), wenn der Ballenwickler in seiner normalen Gebrauchsposition ist.

4. Ballenwickler nach Anspruch 3, **dadurch gekennzeichnet, dass** der Wickeltisch (24) eine Massenzentrumslinie (PP) hat und dass der Wickeltisch (24) an den Rahmen (10) durch zwei erste Schwingen (26) für den Teil zwischen der Massenzentrumslinie (PP) und der vorderen Kante (14) und durch zwei zweite Schwingen (28) für den Teil zwischen der Massenzentrumslinie und der hinteren Kante (26) aufgehängt ist.

5. Ballenwickler nach einem der Ansprüche 1 - 4, **dadurch gekennzeichnet, dass** die ersten Schwingen (26) biegesteife Stangen sind.

6. Ballenwickler nach einem der Ansprüche 1 - 5, **dadurch gekennzeichnet, dass** das Stellglied angeordnet ist, um die erste Schwinge (26) um den Befestigungspunkt der Schwinge (26) und des Rahmens (10) zu drehen.

7. Ballenwickler nach einem der Ansprüche 1 - 6, **dadurch gekennzeichnet, dass** die Länge der zweiten Schwingen (28) einstellbar ist.

8. Ballenwickler nach Anspruch 7, **dadurch gekennzeichnet, dass** die zweiten Schwingen (28) Zylinder von einstellbarer Länge sind, vorzugsweise Hydraulikzylinder.

9. Ballenwickler nach einem der Ansprüche 1 - 8, **dadurch gekennzeichnet, dass** das Stellglied ein Übertragungszylinder (30) von einstellbarer Länge ist, der ein erstes Ende, das an dem Rahmen (10) angebracht ist, und ein zweites Ende, das an der ersten Schwinge (26) entweder direkt oder durch einen Hebelmechanismus angebracht ist, hat.

10. Ballenwickler nach Anspruch 9, **dadurch gekennzeichnet, dass** der Hebelmechanismus einen Steuerhebel (32) aufweist, der ein erstes Ende, das in einer gelenkigen Weise an dem Rahmen (10) angebracht ist, und ein zweites Ende, das in einer gelenkigen Weise an dem zweiten Ende des Übertragungszylinders (30) angebracht ist, hat.

11. Ballenwickler nach Anspruch 9 oder 10, **dadurch gekennzeichnet, dass** der Hebelmechanismus eine Crab-Stange (34) aufweist, wobei die Crab-Stange (34) ein erstes Ende, das an der ersten Schwinge (26) angebracht ist, und ein zweites Ende, das in einer gelenkigen Weise an dem zweiten Ende des Übertragungszylinders (30) angebracht ist, hat.

12. Ballenwickler nach einem der Ansprüche 9 - 11, **dadurch gekennzeichnet, dass** der Wickeltisch (24) zu der Aufnahmestation (12) durch Bringen des Übertragungszylinders (30) auf eine erste Länge, zu der Zwischenstation (18) durch Bringen des Übertragungszylinders (30) auf eine zweite Länge, zu der Wickelstation (22) durch Bringen des Übertragungszylinders (30) auf eine dritte Länge und zu einer Ausgabeposition in der Wickelstation (22) durch Bringen des Übertragungszylinders (30) auf eine vierte Länge bewegt werden kann.

13. Ballenwickler nach Anspruch 12, **dadurch gekennzeichnet, dass** die vierte Länge des Übertragungszylinders (30) größer ist als die dritte Länge, die dritte Länge größer ist als die zweite Länge und die zweite Länge größer ist als die erste Länge.

14. Ballenwickler nach einem der Ansprüche 9 - 13, **dadurch gekennzeichnet, dass** der Übertragungszylinder (30) ein Hydraulikzylinder ist.

## Revendications

1. Enrubanneuse comprenant un bâti (10), une station de réception (12) pour recevoir une balle (100), un dispositif d'enroulement (50) pour enrouler un film de protection autour de la balle (100) reçue, le dispositif d'enroulement comprenant une station d'enroulement (22), une table d'enroulement (24) et un actionneur pour déplacer la table d'enroulement (24) entre la station de réception (12) et la station d'enroulement (22), laquelle table d'enroulement (24) est suspendue sur le châssis (10) d'une manière articulée par au moins un premier culbuteur (26) et au moins un second culbuteur (28), de sorte que les culbuteurs (26, 28) peuvent être amenés dans une première position, dans laquelle la table d'enroulement (24) est dans la station de réception (12), et dans une deuxième position, dans laquelle la table d'enroulement (24) est dans la station d'enroulement (22), **caractérisée en ce que** les culbuteurs (26, 28) peuvent être amenés dans une troisième position, de sorte que la table d'enroulement (24) est dans une station intermédiaire (18) entre la station de réception (12) et la station d'enroulement (22), dans laquelle station intermédiaire (18), la table d'enroulement (24) est positionnée plus bas que dans la station de réception (12) et la station d'enroulement (22), lorsque l'enrubanneuse est dans sa position habituelle d'utilisation.

2. Enrubanneuse selon la revendication 1, **caractérisée en ce que** la table d'enroulement (24) est agencée pour passer de la station de réception (12) à la station intermédiaire (18) par un impact de gravité de la table d'enroulement (24) et la balle (100) agencée sur cette dernière, lorsque l'enrubanneuse est dans sa position habituelle d'utilisation.

3. Enrubanneuse selon les revendications 1 ou 2, **caractérisée en ce que** la table d'enroulement (24) a un bord avant (14) et un bord arrière (16) et **en ce que** la table d'enroulement (24) dans la station d'enroulement (22) peut être amenée dans une position de décharge, dans laquelle le bord avant (14) de la table d'enroulement est positionné sensiblement plus haut que le bord arrière (16), lorsque l'enrubanneuse est dans sa position habituelle d'utilisation.

4. Enrubanneuse selon la revendication 3, **caractérisée en ce que** la table d'enroulement (24) a une masse de ligne centrale (PP) et **en ce que** la table d'enroulement (24) est suspendue au bâti (10) par deux premiers culbuteurs (26) pour la partie entre la masse de ligne centrale (PP) et le bord avant (14) et par deux seconds culbuteurs (28) pour la partie entre la masse de la ligne centrale et le bord arrière (26).

5. Enrubanneuse selon l'une quelconque des revendications 1 à 4, **caractérisée en ce que** les premiers culbuteurs (26) sont des tiges rigides à la flexion.

6. Enrubanneuse selon l'une quelconque des revendications 1 à 5, **caractérisée en ce que** ledit actionneur est monté pour faire tourner le premier culbuteur (26) autour du point de fixation du culbuteur (26) et du bâti (10).

7. Enrubanneuse selon l'une quelconque des revendications 1 à 6, **caractérisée en ce que** la longueur des seconds culbuteurs (28) est ajustable.

8. Enrubanneuse selon la revendication 7, **caractérisée en ce que** les seconds culbuteurs (28) sont des cylindres de longueur ajustable, de préférence des cylindres hydrauliques.

9. Enrubanneuse selon l'une quelconque des revendications 1 à 8, **caractérisée en ce que** ledit actionneur est un cylindre de transfert (30) de longueur réglage, qui a une première extrémité fixée au bâti (10) et une seconde extrémité fixée au premier culbuteur (26) directement ou par le biais d'un mécanisme de levier.

10. Enrubanneuse selon la revendication 9, **caractérisée en ce que** ledit mécanisme de levier comprend un levier de commande (32) qui a une première extrémité se fixant, d'une manière articulée, au bâti (10) et une seconde extrémité, qui se fixe, d'une manière articulée, à la seconde extrémité du cylindre de transfert (30).

11. Enrubanneuse selon la revendication 9 ou 10, **caractérisée en ce que** ledit mécanisme de levier comprend une barre de treuil (34), la barre de treuil (34) ayant une première extrémité se fixant au premier culbuteur (26) et une seconde extrémité se fixant, d'une manière articulée, à la seconde extrémité du cylindre de transfert (30).

12. Enrubanneuse selon l'une quelconque des revendications 9 à 11, **caractérisée en ce que** ladite table d'enroulement (24) peut être déplacée dans la station de réception (12) en amenant le cylindre de transfert (30) à une première longueur, dans la station intermédiaire (18) en amenant le cylindre de transfert (30) à une deuxième longueur, dans la station d'enroulement (22) en amenant le cylindre de transfert (30) à une troisième longueur, et dans une position de décharge dans la station d'enroulement (22) en amenant le cylindre de transfert (30) à une quatrième longueur.

13. Enrubanneuse selon la revendication 12, **caractérisée en ce que** la quatrième longueur du cylindre de transfert (30) est plus importante que la troisième longueur, la troisième longueur est plus importante que la deuxième longueur, et la deuxième longueur est plus importante que la première longueur.

14. Enrubanneuse selon l'une quelconque des revendications 9 à 13, **caractérisée en ce que** ledit cylindre de transfert (30) est un cylindre hydraulique.
